Europäisches Patentamt

European Patent Office

Office européen des brevets

(11) Veröffentlichungsnummer: **0 261 404 B1**

(12) **EUROPÄISCHE PATENTSCHRIFT**

(45) Veröffentlichungstag der Patentschrift: **13.02.91**

(51) Int. Cl.[5]: **G01C 21/22, G09B 29/10**

(21) Anmeldenummer: **87112115.8**

(22) Anmeldetag: **20.08.87**

(54) Navigationseinrichtung für ein Fahrzeug.

(30) Priorität: **25.09.86 DE 3632619**

(43) Veröffentlichungstag der Anmeldung:
**30.03.88 Patentblatt 88/13**

(45) Bekanntmachung des Hinweises auf die
Patenterteilung:
**13.02.91 Patentblatt 91/07**

(84) Benannte Vertragsstaaten:
**DE ES FR GB IT SE**

(56) Entgegenhaltungen:
**EP-A- 0 036 119**
**EP-A- 0 166 547**
**US-A- 3 789 198**
**US-A- 4 550 317**

**ELEKTROTECHNIEK/ELEKTRONICA, Nr. 3,**
**1985, Seiten 27-29, Doetichem, NL; "CARIN:**
**een elektronische co-piloot in auto's"**

(73) Patentinhaber: **Siemens Aktiengesellschaft**
**Wittelsbacherplatz 2**
**D-8000 München 2(DE)**

(72) Erfinder: **Wuttke, Gero**
**Eichendorffstrasse 54a**
**D-8400 Regensburg(DE)**

## EP 0 261 404 B1

**Beschreibung**

Die Erfindung betrifft eine Navigationseinrichtung für ein Fahrzeug gemäß Oberbegriff von Anspruch 1.

Solche Navigationseinrichtungen ermitteln aktuelle Positionsangaben des Fahrzeugs aus den Richtungsmeßwerten einer Magnetfeldsonde und eines Fahrtstreckenmessers durch Koppelnavigation. Aus der Richtung und der Fahrtstrecke werden dabei kurzzeitig hintereinander Vektoren gebildet, die aneinander gekoppelt eine Kette aus Vektoren ergeben, deren jeweiliger Endpunkt die aktuelle Positionsangabe darstellt. Vor allem bedingt durch magnetische Störungen entstehen dabei Positionsfehler, die gerade bei längeren Fahrten sehr groß werden können. Insbesondere in Stadtgebieten mit den dort häufig auftretenden magnetischen Störungen und den erhöhten Genauigkeitsanforderungen wegen des dichten Straßennetzes, ist die Positionsbestimmung problematisch.

Um diese Positionsfehler zu korrigieren, geht man davon aus, daß sich ein Fahrzeug normalerweise nur auf Straßen bewegt und somit alle ermittelten Positionsangaben, die nicht auf einer Straße liegen, falsch sind.

Zu diesem Zweck erhält die Navigationseinrichtung einen Planspeicher in dem in digitalisierter Form eine Straßenkarte abgelegt ist, um damit die gemessenen Positionsangaben vergleichen und evtl. korrigieren zu können. Eine solche Navigationseinrichtung mit digitalisiertem Stadtplan ist z.B. im LOLA-Abschlußbericht beschrieben ("Experimentalstudie über die Möglichkeit der Lokalisierung von Landfahrzeugen LOLA", Teil 3). Die einzelnen Straßen der Straßenkarte werden dabei durch je einen Polygonzug, bestehend aus mindestens zwei Koordinatenpunktpaaren, definiert. Je stärker gekrümmt der Verlauf einer Straße ist oder je unregelmäßiger er ist, desto mehr Koordinatenpunktpaare werden zu seiner Beschreibung benötigt. Ein weiteres Koordinatenpunktpaar kennzeichnet jede Straßeneinmündung oder Kreuzung, um einerseits Beginn und Ende einer Straße zu markieren und andererseits die räumliche Zuordnung der Straßen untereinander festzulegen.

Die bekannte Navigationseinrichtung prüft, ob eine gemessene Positionsangabe des Fahrzeugs auf einem der Polygonzüge der Straßen liegt. Bei Abweichungen ermittelt sie den der Positionsangabe am nächsten liegenden Punkt auf einer Straße und verarbeitet diesen Punkt bei der weiteren Navigation.

Der Speicherplatzbedarf für eine derartige digitale Straßenkarte, z.B. für den Stadtplan einer großen Stadt, liegt bei einigen hundert Kilobyte.

Dieser Speicher wird bei jedem Vergleich und bei jeder Korrektur einer Positionsangabe praktisch vollständig durchsucht. Außerdem muß der geometrisch kürzeste Abstand zwischen der Positionsangabe und der Verbindungslinie zwischen den einzelnen Koordinatenpunktpaaren gesucht werden; beides bedeutet einen erheblichen Aufwand.

Eine andere Organisation des Planspeichers ist aus der US-Patentschrift 3,789,198 bekannt.

Die Straßenkarte eines Gebiets wird dabei mit einem Netz überzogen, dessen einzelne Maschen gleichförmige Netzelemente bilden. Diesen Netzelementen lassen sich eindeutig zwei unterschiedliche Eigenschaften in Bezug auf die Straßen zuordnen. Ein Netzelement liegt entweder mit einem Teil oder mit seiner ganzen Fläche auf einer Straße - positives Netzelement - oder es liegt nicht auf einer Straße - negatives Netzelement. Unter dem Begriff Straße ist hierbei jede Fläche zu verstehen, die zum Befahren für Fahrzeuge vorgesehen ist. Die Netzelemente, die auf Straßen liegen, erhalten die Wertigkeit "1" und diejenigen, die auf keiner Straße liegen, die Wertigkeit "0".

Die Straßenkarte ist damit durch ein Netz mit binären Einsen und Nullen für die Netzelemente vollständig beschrieben. Jedes Binärzeichen eines Netzelements ist unter einer Adresse abgespeichert, die seiner räumlichen Lage in einem Koordinatensystem entspricht. Da die gemessenen Positionsangaben des Fahrzeugs ebenfalls auf ein Koordinatensystem bezogen sind, lassen sich die Adressen der zugehörigen Netzelemente aus den Positionsangaben berechnen. Die Berechnung beschränkt sich dabei lediglich darauf, verschiedene Ursprünge der Koordinatensysteme und unterschiedliche Koordinatenmaßstäbe zu berücksichtigen.

Die Navigationseinrichtung ist damit in der Lage, ohne Durchsuchen des gesamten Speichers, direkt aus einer Positionsangabe des Fahrzeugs diejenige Speicherzelle zu adressieren, deren Inhalt mit einer binären Null oder Eins angibt, ob die Positionsangabe auf eine Straße trifft oder nicht.

Liegt die Positionsangabe nicht auf einer Straße, so wird diese Positionsangabe senkrecht zur Fahrtrichtung des Fahrzeugs solange verschoben, bis sie auf eine Straße trifft. Dieser Punkt wird dann für die weitere Navigation verwendet.

Auch eine solche Korrekturmethode kann bei Auftreten von magnetischen Störungen zu bleibenden Postionsfehlern führen. Sind durch die Störungen einige Positionsangaben stark verfälscht, so wird durch die Korrektur die nächstliegende Positionsangabe, die auf einer Straße liegt verwendet. Bedingt durch die starke Abweichung der Positionsangabe kann der verwendete Wert daher auch auf einer Parallelstraße

2

liegen, auf der sich das Fahrzeug gar nicht befindet. Treten mehrere solche Störungen hintereinander auf, so können durch die Korrektur noch weiterhin entfernte Straßen gefunden werden. Nach Abklingen der Störung wird die Koppelnavigation dann auf der zuletzt gefundenen Straße weitergeführt und die fehlerhafte Abweichung bleibt dauerhaft erhalten.

Die Aufgabe der Erfindung besteht dem gegenüber darin, eine solche Korrektur so zu verbessern, daß keine bleibenden Abweichungen auftreten.

Die erfindungsgemäße Lösung ist im Patentanspruch 1 gekennzeichnet. Vorteilhafte Weiterbildungen der Erfindung finden sich in den abhängigen Patentansprüchen.

Beim Auftreten einer Abweichung des durch die Positionsangaben bestimmten Kursverlaufs vom Straßenverlauf, z. B. durch eine starke magnetische Störung, ist der Kursverlauf normalerweise gegenüber dem Straßenverlauf nicht nur parallelverschoben, sondern verformt. Nach Abklingen der Störung bleibt aber nur eine parallele Verschiebung des Kursverlaufs gegenüber dem Straßenverlauf weiter bestehen, da die Koppelnavigation den verformten Kursverlauf mitberücksichtigt.

Stellt die Navigationseinrichtung daher eine Abweichung des durch die Positionsangaben bestimmten Kursverlaufs vom Straßenverlauf fest, so wird dieser Kursverlauf in einem Fehlerspeicher abgespeichert. Eine Korrekturstufe variiert diesen Kursverlauf in jede Richtung um einen Verschiebewert, bis ein Korrekturwert - ebenfalls ein Vektor - gefunden ist, so daß der damit verschobene Kursverlauf wieder auf einen Straßenverlauf paßt.

Dieser Korrekturwert wird dann entweder wie einer der Teilvektoren behandelt, die von der Koppelnavigation geliefert werden, also dem vorangegangenen Teilvektor einmalig hinzugerechnet. Eine andere Möglichkeit ist, den durch die Koppelnavigation ermittelten und durch die Teilvektoren bestimmten Kursverlauf unbeeinflußt zu lassen und jeder auf eine Korrektur folgenden Positionsangabe den Korrekturwert hinzuzurechnen. Die Erfindung wird anhand eines solchen Ausführungsbeispiels näher erläutert. Dabei zeigen:

FIG 1    ein Blockschaltbild einer Navigationseinrichtung,

FIG 2    eine Straßenkarte eines Gebiets, das mit n Netzteilen überzogen ist, und

FIG 3    einen Teil einer Straßenkarte eines Gebiets, das mit einem Netzteil aus Netzelementen überzogen ist,

FIG 4    die Datenorganisation für die Straßenkarte in einem Planspeicher,

FIG 5    einen Ausschnitt aus der Straßenkarte gemäß FIG 2 mit zugehöriger Tabellendarstellung.

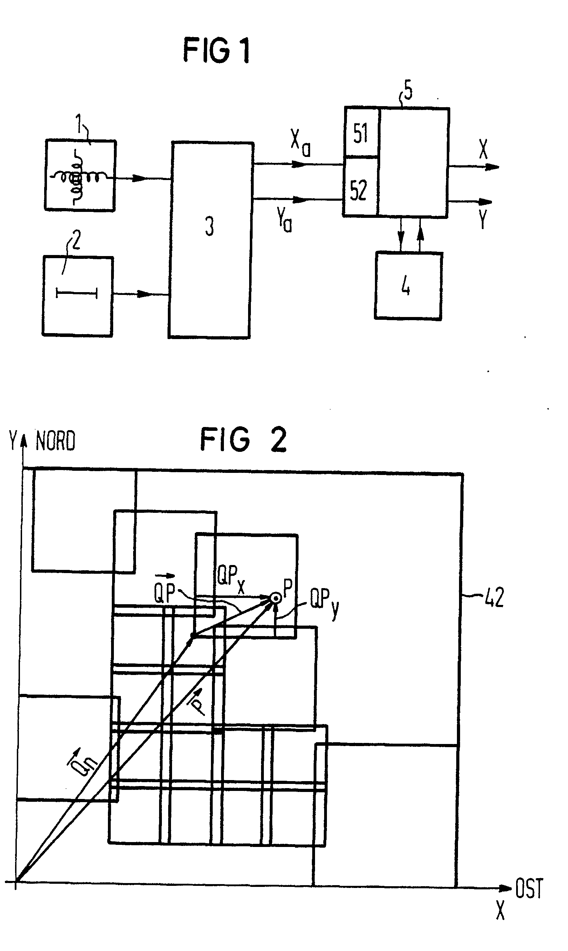

Gemäß FIG 1 erhält die Navigationseinrichtung eine Magnetfeldsonde 1, einen Fahrtstreckenmesser 2, eine Logik einrichtung 3, einen Planspeicher 4 sowie eine Korrekturstufe 5 mit einem Fehlerspeicher 51 und einem Positionsspeicher 52.

Die Magnetfeldsonde 1 dient zur Messung des Erdmagnetfeldes und gibt laufend Meßwerte an die Logikeinrichtung 3 weiter, die die Fahrtrichtung des Fahrzeugs bestimmen. Der Fahrtstreckenmesser 2 mißt die zurückgelegte Fahrtstrecke und gibt diese Meßwerte ebenfalls an die Logikeinrichtung 3 weiter. Die Logikeinrichtung 3 bestimmt daraus Positionsangaben $X_a$, $Y_a$ (bezogen auf ein kartesisches Koordinatensystem) des Fahrzeugs und gibt diese an den Positionsspeicher 52 der Korrekturstufe 5 weiter.

Die Korrekturstufe 5 hat die Aufgabe, durch Vergleich mit einer digital abgespeicherten Straßenkarte zu prüfen, ob die gemessenen Positionsangaben $X_a$, $Y_a$ auf einer Straße liegen. Zu diesem Zweck ist die Korrekturstufe 5 mit dem Planspeicher 4 verbunden.

Im Planspeicher 4 ist die Straßenkarte in digitaler Form abgespeichert. Sie ist hierzu mit einem Netz 42 aus Netzelementen 421 gleicher Größe überzogen. Die Netzelemente 421 sind quadratisch, wobei ihre Kantenlänge K von der Dichte der Straßen abhängt. Bei sehr dicht liegenden Straßen ist diese Kantenlänge z.B. 10 m und beträgt bei weniger dicht verlaufenden Straßen z.B. 50 m. Diejenigen - positiven - Netzelemente 421, die mit dem überwiegenden Teil ihrer Fläche auf einer Strasse liegen, erhalten die binäre Wertigkeit 1, die restlichen - negativen - Netzelemente 421 die binäre Wertigkeit 0.

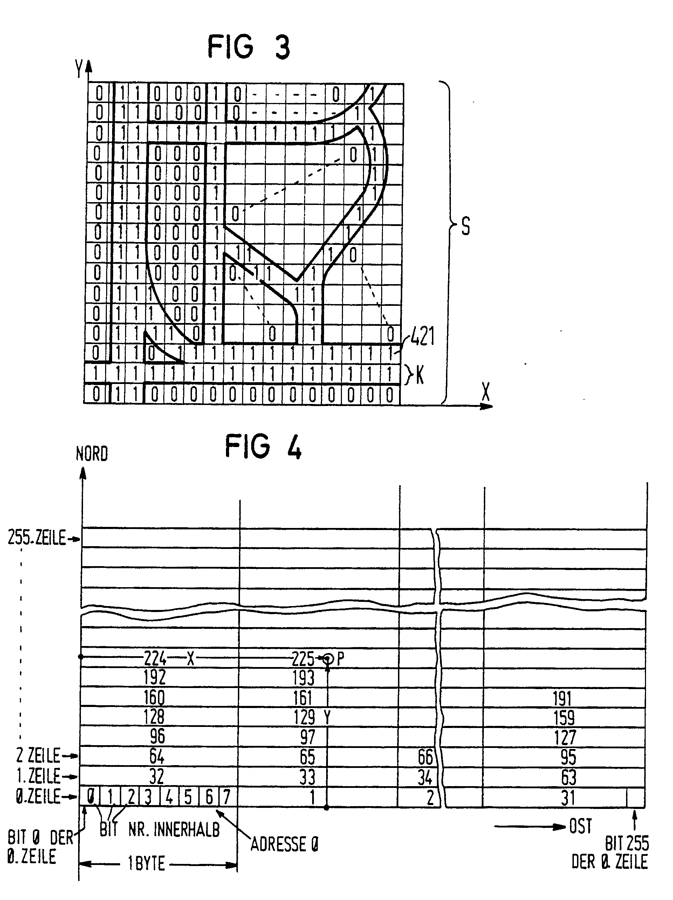

Das gesamte Netz 42 einer Straßenkarte ist in Netzteile (vgl. FIG 2) gegliedert, von denen eines mit einer Seitenlänge S und mit zugehörigem kartesischem Koordinaten system mit den Achsen X, Y in FIG 3 dargestellt ist. Die Binärzeichen der Netzelemente 421 sind im Planspeicher 4 gemäß FIG 4 organisiert. Das Netzteil hat bei diesem Beispiel eine Seitenlänge S von 2.56 km und ist in Netzelemente 421 mit einer Kantenlänge K von 10 m unterteilt. Das gesamte Netzteil enthält dann $2^{16}$ Netzelemente 421, von denen jedes ein Bit Speicherplatz benötigt. Nach FIG 4 sind die Binärzeichen der Netzelemente 421 in 256 horizontale übereinander liegende Zeilen gegliedert, die jeweils 256 Bit lang sind. Beginnend in der nullten Zeile bilden jeweils 8 fortlaufende Bit ein Byte, so daß jede Zeile 32 Byte enthält. Diese Bytes werden fortlaufend, beginnend mit dem Byte 0 der nullten Zeile, von links nach rechts zeilenweise durchnummeriert, so daß die erste Zeile mit dem Byte 32, die zweite Zeile mit dem Byte 64 usw. beginnt.

Diese Nummerierung ist an einigen Beispielen in der FIG 4 eingezeichnet.

Die acht Bit innerhalb jedes Bytes sind ebenfalls durchnummeriert, was am Beispiel des Byte 0 der nullten Zeile in der FIG 4 zu finden ist.

Damit ergibt sich die Adresse zu einer Positionsangabe $X_a$, $Y_a$ zu $Y_a \times 32 + X_a : 8$.

Dabei ist vorausgesetzt, daß die Positionsangabe $X_a$, $Y_a$ in der Einheit der Kantenlänge K vorliegt. Der ganzzahlige Anteil des Ergebnisses obiger Formel ist dabei die Nummer des Bytes und der nicht mehr ganzzahlig teilbare Rest die Nummer des Bits innerhalb dieses Bytes.

In die FIG 4 ist ein Beispiel für diese Adreßberechnung eingezeichnet. Der Punkt P sei eine von der Navigations einrichtung gemessene Positionsangabe $X_a$, $Y_a$ mit $X_a$ = 0.12 km und $Y_a$ = 0.07 km. In der Einheit der Kantenlänge K der Netzelemente 421 (= 10m) ausgedrückt, ergibt sich Xa = 12 und Ya = 7 und die Adresse zu:

$7 \times 32 + 12 : 8 = 224 + 1/\text{Rest } 4 = \text{Byte } 225, \text{Bit Nr. } 4.$

Die Korrekturstufe 5 liest also das Bit Nr. 4 der Adresse 225 aus dem Planspeicher 4 aus. Ist der Inhalt dieser Speicherzelle eine 1, liegt die geprüfte Positionsangabe $X_a$, $Y_a$ auf einer Straße (Straßenwert), ist es eine 0, so liegt eine Abweichung (Abweichwert) vor.

Die einzelnen Netzteile des Netzes 42 können unterschiedliche Seitenlängen S und Kantenlängen K ihrer Netzelemente haben; das ist besonders zweckmäßig, wenn das Netz 42 beispielsweise ein dichtes innerstädtisches Straßennetz und gleichzeitig einen Randbezirk mit sehr dünnem Straßennetz abdeckt. Stellt die Korrekturstufe 5 fest, daß das Fahrzeug die Grenze eines Netzteiles erreicht hat, so schaltet sie auf das neue Netzteil um. Ein solches, mit mehreren Netzteilen abgedecktes Gebiet zeigt die FIG 2. Die Netzteile überlappen sich im Randbereich, um für das Umschalten von einem Netzteil zum anderen einen "Hystereseeffekt" zu erreichen, so daß ein ständiges Hin- und Herschalten vermieden wird.

Jedes der Netzteile hat einen Bezugsvektor $\vec{Q}$, der die Position der linken unteren Ecke des Netzteils bezogen auf den Ursprung des Koordinatensystems des gesamten Netzes 42 festlegt. Beispielhaft ist in die FIG 2 der Bezugsvektor $\vec{Q}_n$ für ein n-tes Netzteil eingezeichnet. Ein in diesem n-ten Netzteil liegender Positionspunkt des Fahrzeugs hat den Vektor $\vec{P}$, der durch die Positionsangabe $X_a$, $Y_a$ bestimmt ist. Mit diesen beiden Vektoren $\vec{Q}_n$ und $\vec{P}$ ist der Positionsvektor $\overrightarrow{QP}$ des Fahrzeugs innerhalb dieses n-ten Netzteiles mit

$$\overrightarrow{QP} = \vec{P} - \vec{Q}_n \qquad\qquad (1)$$

errechenbar. Die Komponenten von $\overrightarrow{QP}$, $QP_x$ und $QP_y$ erlauben dann die Berechnung der Adresse innerhalb des n-ten Netzteiles analog dem bereits beschriebenen Beispiel.

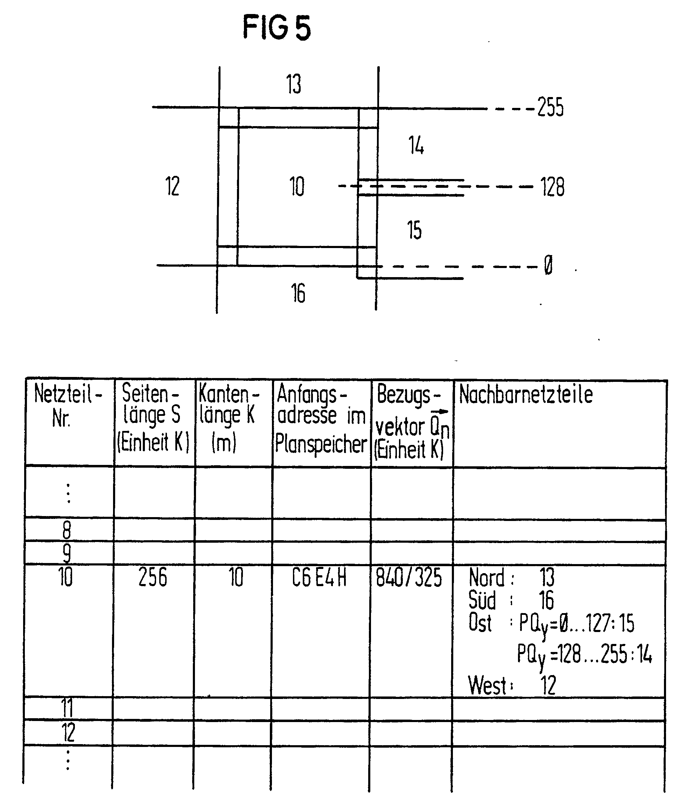

Die Kenngrößen der einzelnen Netzteile sind in tabellarischer Form im Planspeicher 4 abgelegt. Die FIG 5 zeigt dazu einen Ausschnitt der Straßenkarte eines Gebiets gemäß FIG 2 mit der zugehörigen Darstellung der Kenngrößen in der Tabelle.

Die Tabelle ist am Beispiel eines Netzteils Nr. 10 ausgeführt. Die erste Spalte der Tabelle enthält diese Netzteilnummer. Die beiden nächsten Spalten weisen die Seitenlänge S des Netzteils, ausgedrückt in der Einheit K der Netzelemente 421 sowie die Kantenlänge K der Netzelemente 421 in Meter, auf. Die nächste Spalte gibt die Anfangsadresse dieses Netzteils im Planspeicher 4 an, d.h. ab welcher Stelle im Speicher die Daten dieses Netzteils Nr. 10 abgespeichert sind. Die folgende Spalte hat die Komponenten des Bezugsvektors $\vec{Q}_n$ des Netzteils zum Inhalt. Die letze Spalte gibt schließlich die Nachbarnetzteile an. In Richtung Nord ist dies das Netzteil Nr. 13, in Richtung Süd das Netzteil Nr. 16 und in Richtung West das Netzteil Nr. 12. In Richtung Ost liegen die beiden Netzteile mit der Nr. 14 und 15. Um diese beiden Netzteile in ihrer räumlichen Lage gegenüber dem Netzteil Nr. 10 unterscheiden zu können, ist deren Lage durch die Komponente $QP_y$ des Positionsvektors des Netzteils Nr. 10 angegeben. Das Netzteil Nr. 15 liegt demnach im Bereich von $QP_y$ von 0 bis 127 und das Netzteil 14 im Bereich von $QP_y$ von 128 bis 255.

Stellt die Korrekturstufe 5 fest, daß die Positionsangaben $X_a$, $Y_a$ des Fahrzeugs die Grenze eines Netzteils erreicht haben, so schaltet sie gemäß den Angaben in der Tabelle von FIG 5 auf das entsprechende Nachbarnetzteil um.

Lediglich bei der Inbetriebnahme der Navigationseinrichtung muß einmal der Planspeicher 4 durchsucht werden, um festzustellen, in welchem Netzteil die erste gemessene Positionsangabe $X_a$, $Y_a$ liegt. Dazu wird für jeden der Bezugsvektoren $Q_n$ die Subtraktion gemäß Gleichung (1) mit der ersten gemessenen Positionsangabe $X_a$, $Y_a$ durchgeführt. Derjenige Bezugsvektor $Q_n'$ der den Vektor QP ergibt, dessen Komponenten $QP_x$ und $QP_y$ positiv sind und ein Minimum an Größe haben, bezeichnet das zutreffende Netz-teil.

Die Korrekturstufe 5 dient dazu, diese parallele Verschiebung des Kursverlaufs zu korrigieren. Sie führt die Prüfung, ob eine Positionsangabe $X_a'$ $Y_a$ ein Straßenwert oder ein Abweichwert ist immer dann durch, wenn sich das Fahrzeug um eine Einheit der Kantenlänge K eines Netzelements 421 in Ost-West bzw. Nord-Süd-Richtung bewegt hat. Im Vergleich zur Ermittlung der Positionsangaben $X_a$ ,$Y_a$ läuft die Prüfung also in relativ groben Schritten ab.

Die Korrekturstufe 5 zählt diejenigen Positionsangaben $X_a$, $Y_a$ , die unmittelbar aufeinanderfolgend als Abweichwerte erkannt werden. Treten die Abweichwerte nicht in unmittelbarer Folge, sondern mit Abstand voneinander auf ( $\leq$ 3), 3), so sind dies einzelne zufällige Fehler, die unberücksichtigt bleiben, da immer wieder ein verwertbarer Straßenwert folgt. Folgen dagegen mehr als drei Abweichwerte aufeinander, so liegt eine korrekturbedürftige Abweichung des Kursverlaufs vor.

Die Korrekturstufe 5 legt jeden auftretenden Abweichwert im Fehlerspeicher 51 ab. Folgt darauf wieder ein Straßenwert, so wird der Fehlerspeicher 51 gelöscht. Folgen jedoch vier Abweichwerte aufeinander, so leitet die Korrekturstufe 5 eine Korrektur ein.

Die abgespeicherten Abweichwerte werden dabei in alle Richtungen nacheinander mit einem konstanten Verschiebewert variiert, solange, bis die verschobenen Abweichwerte auf eine Straße treffen. Der konstante Verschiebewert ist dabei in der Einheit der Kantenlänge K der Netzelemente 421 gewählt, so daß beginnend mit einem Verschiebewert von 1 x K die umliegenden Netzelemente 421 abgesucht werden können. Der Verschiebewert wird dazu einzeln auf die Abweichwerte aufaddiert und jede derartig neu gewonnene Positionsangabe $X_a$, $Y_a$ wird wieder auf Straßenwert oder Abweichwert hin geprüft. Ergeben sich bei der Prüfung für einen bestimmten Verschiebewert überwiegend Straßenwerte, so handelt es sich um den richtigen Verschiebewert, Korrekturwert genannt.

Erstreckt sich die Korrektur über die Grenze zweier Netzteile mit verschiedenen Kantenlängen K der zugehörigen Netzelemente 421, so wird der Verschiebewert auf die neue Kantenlänge K umgerechnet. Dazu ist es vorteilhaft, die gewählten Kantenlängen K auf Potenzen von zwei zu beschränken (z.B. 8m, 16m, 32m usw.). Die Umrechnung eines Verschiebewerts beschränkt sich damit auf ein einfaches Rechts-Links-Verschieben, was im Dualsystem einer Division bzw. Multiplikation mit zwei entspricht.

Der Suchbereich ist auf Verschiebewerte bis zu 3K begrenzt, da die Abweichungen normalerweise in diesem Bereich liegen. Falls kein Verschiebewert gefunden wird, der zu einem Straßenverlauf führt, ist der Kurs verformt. Dieses Problem ist dadurch gelöst, daß der Fehlerspeicher 51 begrenzt ist. Dieser ist als Schieberegister zur Aufnahme von zehn Abweichwerten ausgelegt, so daß immer nur die zehn aktuellen Abweichwerte enthalten sind und die vorhergehenden gelöscht werden. Mit fortschreitender Fahrzeugbewegung bleiben schließlich nur Abweichwerte übrig, die den parallel verschobenen Kursverlauf bestimmen. Damit kann die Korrekturstufe 5 einen Korrekturwert finden.

Jeder bei einer nachfolgenden Korrektur ermittelte Korrekturwert wird dem jeweils vorhergehenden Korrekturwert hinzugerechnet und das Ergebnis bildet den jeweils aktuellen Korrekturwert.

Dieser Korrekturwert wird allen folgenden Positionsangaben $X_a$, $Y_a$ zur Ermittlung des Positionswertes X, Y hinzugerechnet, womit der Kursverlauf wieder dem Straßenverlauf entspricht.

Da jeder Korrekturvorgang grundsätzlich für Verschiebewerte in allen Richtungen durchgeführt wird, ist es möglich, daß sich mehrere "richtige" Kursverläufe ergeben. Dann wird für alle diese Fälle der Kursverlauf alternativ weitergeführt, bis sich spätestens beim nächsten Richtungs wechsel des Fahrzeugs, der wahre Kursverlauf ergibt. Sollten mehrere solche Fälle hintereinander auftreten, so würde sich die Zahl der alternativen Kursverläufe weiter erhöhen. Aus diesem Grund ist deren Zahl auf 3 begrenzt. Bei jedem hinzukommenden alternativen Kursverlauf wird deshalb derjenige nicht mehr weiterverfolgt, der bezogen auf das Gebiet in dem die alternativen Kursverläufe liegen, am weitesten am Rand liegt.

Die Aufgaben der Logikeinrichtung 3, der Korrekturstufe 5 mit dem Fehlerspeicher 51 und dem Positionsspeicher 52 und des Planspeichers 4 übernimmt ein Mikroprozessor mit RAM und ROM. Der Fehlerspeicher 51 und der Positionsspeicher 52 sind im RAM der Mikroprozessors enthalten und der Planspeicher 4 ist ein ROM.

**Ansprüche**

1. Navigationseinrichtung für ein Fahrzeug
   - mit einer Magnetfeldsonde (1) zur Gewinnung von Meßwerten für die Fahrtrichtung,
   - mit einem Wegstreckenmesser (2) zum Erfassen von Meßwerten für die Fahrtstrecke,
   - mit einem Planspeicher (4), der in einem Koordinatensystem eine digitalisierte Straßenkarte (41) eines Gebiets enthält,
   - mit einer Logikeinrichtung (3), die hierzu aus den Meßwerten der Magnetfeldsonde (1) und des Wegstreckenmessers (2) durch Koppelnavigation Positionsangaben $(X_a, Y_a)$ des Fahrzeugs, bezogen auf das Koordinatensystem errechnet und in einen Positionsspeicher (52) ablegt,
- mit einer Korrekturstufe (5), die jede n-te Positionsangabe $(X_a, y_a)$ überprüft und - wenn sie nicht auf einer Straße gemäß der Straßenkarte (41) liegt - zu einem Positionswert $(x, Y)$ korrigiert, der einem Punkt auf einer benachbarten Straße entspricht,
- daß die Straßenkarte (41) des Gebiets in ein Netz (42) aus Netzelementen (421) gleicher Größe unterteilt ist,
- daß jedem Netzelement (421) eine Adresse in dem Planspeicher (4) zugeordnet ist, unter der eines von zwei Binärzeichen abgespeichert ist, wobei das eine Binärzeichen ein - positives - Netzelement (421) kennzeichnet, das überwiegend auf einer Straße liegt und das andere Binärzeichen ein - negatives - Netzelement kennzeichnet, das überwiegend nicht auf einer Straße liegt, **dadurch gekennzeichnet,**
- daß die Korrekturstufe (5)
  - einen Fehlerspeicher (51) aufweist, der von den überprüften Positionsangaben $(X_a, Y_a)$ die jeweils m letzten Positionsangaben $(X_a, Y_a)$ enthält, die auf ein negatives Netzelement (421) fallen (= Abweichwert),
  - die Positionsangaben $(X_a, Y_a)$ aus dem Fehlerspeicher (51) solange nacheinander in jede Richtung um einen Verschiebewert variiert, bis ein Korrekturwert gefunden ist, so daß die damit verschobenen Positionsangaben $(X_a, Y_a)$ überwiegend auf positive Netzelemente (421) fallen, und danach den Fehlerspeicher (51) löscht.
  - jede auf eine Korrektur folgende Positionsangabe $(X_a, Y_a)$ um den Korrekturwert korrigiert und das Ergebnis als Positionswert $(X, Y)$ ausgibt.

2. Navigationseinrichtung nach Anspruch 1, **dadurch gekennzeichnet,** daß die Straßenkarte (41) des Gebiets in Netzteile unterteilt ist und daß sich benachbarte Netzteile im Randbereich überlappen.

3. Navigationseinrichtung nach Anspruch 1 und 2, **dadurch gekennzeichnet,** daß die Netzelemente (421) Quadratflächen sind.

4. Navigationseinrichtung nach Anspruch 1, **dadurch gekennzeichnet,** daß der Fehlerspeicher (51) als Schieberegister auf m Abweichwerte begrenzt ist.

5. Navigationseinrichtung nach Anspruch 1, **dadurch gekennzeichnet,** daß jeder Verschiebewert ein ganzzahliges Vielfaches der Kantenlänge K eines Netzelements (421) ist.

## Claims

1. Navigation device for a vehicle
    - comprising a magnetic field probe (1) for obtaining measurement values for the direction of travel,
    - with a travel distance meter (2) for detecting measurement values for the distance travelled,
    - with a map memory (4) which contains a digitized road map (41) of a region in a coordinate system,
    - with a logic device (3) which for this purpose calculates position information $(X_a, Y_a)$ of the vehicle, referred to the coordinate system, by compound navigation from the measurement values of the magnetic field probe (1) and of the travel distance meter (2) and stores this information in a position store (52),
    - with a correction stage (5) which checks each nth position information $(X_a, Y_a)$ and - if it is not located on a road according to the road map (41) - corrects this information to a position value $(X, Y)$ which corresponds to a point on a neighbouring street,
    - that the road map (41) of the region is subdivided into a grid (42) of grid elements (421) of equal size,
    - that each grid element (421) is associated with an address in the map memory (4) at which one of two binary characters is stored, one binary character identifying a - positive - grid element (421) which is predominantly on a road and the other binary character identifying a - negative - grid element which is predominantly not on a road, characterized in that
    - the correction stage (5)
      - exhibits an error store (51) which, of the checked position information $(X_a, Y_a)$, contains the in

each case m most recent position information ($X_a$, $Y_a$) which falls onto a negative grid element (421) ( = deviation value),

- varies the position information ($X_a$, $Y_a$) from the error store (51) successively by one shift value in each direction until a correction value is found so that the position information ($X_a$, $Y_a$) shifted by this means predominantly falls onto positive grid elements (421), and then clears the error store (51).

- corrects each position information ($X_a$, $Y_a$) following a correction by the correction value and outputs the result as position value (X, Y).

2. Navigation device according to Claim 1, characterized in that the road map (41) of the region is subdivided into grid parts and that neighbouring grid parts overlap in the edge area.

3. Navigation device according to Claim 1 and 2, characterized in that the grid elements (421) are square areas.

4. Navigation device according to Claim 1, characterized in that the error store (51), as a shift register, is limited to m deviation values.

5. Navigation device according to Claim 1, characterized in that each shift value is an integral multiple of the edge length K of a grid element (421).


**Revendications**

1. Dispositif de navigation pour un véhicule
   - comportant une sonde magnétique (1) servant à obtenir des valeurs de mesure pour la direction de déplacement,
   - un appareil (2) de mesure de la distance parcourue, servant à détecter les valeurs de mesure pour le trajet de déplacement,
   - une mémoire de plans (4), qui contient, dans un système de coordonnées, une carte routière numérisée (41) d'une région,
   - un dispositif logique (3), qui calcule à cet effet, à partir des valeurs de mesure de la sonde magnétique (1) et de l'appareil (2) de mesure du trajet parcouru, et conformément à une navigation à l'estime, des indications de position ($X_a$,$Y_a$) du véhicule, rapportées au système de coordonnées et les mémorise dans une mémoire de positions (52),
   - un étage de correction (5), qui contrôle chaque n-ème indication de position ($X_a$,$Y_a$) et -lorsque cette position n'est pas située sur une route conformément à une carte routière (41)- effectue une correction aboutissant à une valeur de position (x,Y), qui correspond à un point situé sur une route voisine,
   - que la carte routière (4I) de la région est subdivisée en un réseau (42) formé d'éléments (421) de même taille,
   - qu'à chaque élément (421) du réseau est associée une adresse située dans la mémoire de plans (4) et à laquelle l'un de deux chiffres binaires est mémorisé, un chiffre binaire caractérisant un élément -positif- (421) du réseau, qui est situé principalement sur une route, et l'autre chiffre binaire caractérisant un élément -négatif- du réseau, qui n'est essentiellement pas situé sur une route, caractérisé par le fait
   - que l'étage de correction (5) possède
     - une mémoire d'erreurs (51), qui contient les m dernières indications de position ($X_a$,$Y_a$) respectives, qui tombent au niveau d'un élément négatif (421) du réseau ( = valeur d'écart),
     - modifie successivement dans chaque sens, et d'une valeur de décalage, les indications de position ($X_a$,$Y_a$) tirées de la mémoire d'erreurs (51), jusqu'à ce qu'une valeur de correction soit trouvée pour que les indications de position ($X_a$,$Y_a$) décalées de cette manière se situent dans une large mesure sur des éléments positifs (421) du réseau, et efface ensuite la mémoire d'erreurs (51),
     - corrige, au moyen de la valeur de correction, chaque indication de position ($X_a$, $Y_a$) succédant à une correction, et délivre le résultat en tant que valeur de position (x,Y).

2. Dispositif de navigation suivant la revendication 1, caractérisé par le fait que la carte routière (41) de la

7

région est subdivisée en parties de réseau et que des parties voisines du réseau se chevauchent au niveau de leur zone marginale.

3. Dispositif de navigation suivant les revendications 1 et 2, caractérisé par le fait que les éléments (421) du réseau sont des surfaces carrées.

4. Dispositif de navigation suivant la revendication 1, caractérisé par le fait que la mémoire d'erreurs (51) est limitée, en tant que registre à décalage, à m valeurs d'écart.

5. Dispositif de navigation suivant la revendication 1, caractérisé par le fait que chaque valeur de décalage est un multiple entier de la longueur K des côtés d'un élément (421) du réseau.

## FIG 1

## FIG 2

## FIG 3

## FIG 4

# FIG 5

| Netzteil- Nr. | Seiten- länge S (Einheit K) | Kanten- länge K (m) | Anfangs- adresse im Planspeicher | Bezugs- vektor $\vec{Q_n}$ (Einheit K) | Nachbarnetzteile |
|---|---|---|---|---|---|
| ⋮ | | | | | |
| 8 | | | | | |
| 9 | | | | | |
| 10 | 256 | 10 | C6 E4 H | 840/325 | Nord : 13 Süd : 16 Ost : $PQ_y = \emptyset \ldots 127 : 15$ $PQ_y = 128 \ldots 255 : 14$ West : 12 |
| 11 | | | | | |
| 12 | | | | | |
| ⋮ | | | | | |